# EUROPEAN PATENT APPLICATION

(11) **EP 1 637 352 A1**
(43) Date of publication of application: **22.03.2006**
(21) Application number: 05108416.8
(22) Date of filing: 14.09.2005
(51) Int. Cl.: B60B 33/00, A47B 91/02

(54) **Antiscraping rototranslation support with a leveller for a piece of furniture**

(30) Priority: 16.09.2004 IT MI20041762
(71) Applicant: Stampmatic S.r.l., 20050 Sovico MI (IT)
(72) Inventor: Panzeri, Vittorio, 20050, MACHERIO (Milan) (IT); Panzeri, Gioacchino, 20050, MACHERIO (Milan) (IT); Panzeri, Eraldo, 20046, BIASSONO (Milan) (IT)
(74) Representative: Martegani, Franco

(57) **Abstract**

Antiscraping rototranslation support with a leveller for a piece of furniture (10) comprising a small block (20) destined for being fixed to a shoulder (11) of the piece of furniture and housing an extendable foot, characterized in that said block (20) also comprises rolling means destined for coming into contact with the floor with the extendable foot withdrawn.

## Description

The present invention relates to an antiscraping rototranslation support with a leveller for a piece of furniture.

Items of furniture are currently provided with feet which keep them raised from the floor, for the sake of hygiene, aeration of the lower area, and for allowing the height and planarity of the furniture itself to be regulated.

Once the piece of furniture has been positioned, it is possible to act on means suitable for levelling it, for example in the case of irregular floors, to allow it to rest with a perfect balance.

Adjustable feet for furniture have consequently been known for some time and, in the most simplified versions, they have a threaded sleeve, pressure-inserted in the shoulder of the piece of furniture.

The foot comprises a threaded stem equipped with means for screwing it into the sleeve.

Another known device for regulating the height of a piece of furniture comprises a block to be fixed to the shoulder of the piece of furniture to allow the activation of the foot by means of a screwdriver or other similar tool passing through a hole situated in the bottom of the furniture.

It has been observed, however, that it is frequently necessary to move the furniture for numerous reasons (painting, periodical cleaning, changing position and others).

This is generally effected by lifting or dragging the piece of furniture which, apart from the fatigue involved, also creates the risk of scratching or in any case damaging the floor.

A general objective of the present invention is therefore to provide an antiscraping rototranslation support with a leveller for a piece of furniture which allows it to be moved without damaging the floor and with the least possible effort.

A further objective of the present invention is to provide an antiscraping rototranslation support with a leveller for a piece of furniture, which is simple to install and easy to use.

Yet another objective of the present invention is to provide an antiscraping rototranslation support with a leveller which can be adapted to any kind of furniture.

In view of the above objectives, according to the present invention, an antiscraping rototranslation support with a leveller for a piece of furniture has been conceived, having the characteristics specified in the enclosed claims.

The structural and functional characteristics of the present invention and its advantages with respect to the known art will appear more evident from the following description, referring to the enclosed drawings which show an antiscraping rototranslation system with a leveller for a piece of furniture produced according to the innovative principles of the invention itself.
In the drawings:

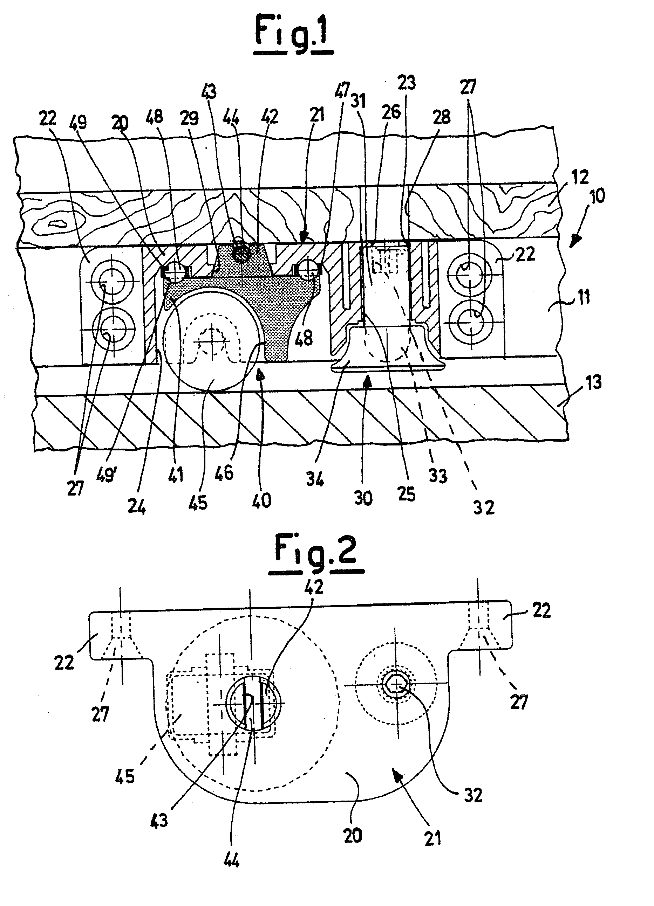

- figure 1 is a raised sectional side view of the device according to the invention;
- figure 2 is a plan view of the device of figure 1;
- figure 3 is a perspective view of a device according to the invention assembled on a piece of furniture.

With reference to the figures, these describe an antiscraping rototranslation support with a leveller for a piece of furniture 10 equipped with shoulders 11, and a bottom 12, and resting on a floor 13.

The levelling support comprises a small block 20 equipped with brackets 22 in turn equipped with holes 27 for fixing, by means of screws 27', to the shoulder 11 of the piece of furniture.

In the block 20 there are two circular seats 23 and 24 open downwards and partially closed above by the upper base 21 of the block. The block 20 is envisaged for housing an extendable foot 30 inside the first seat 23 passing through the block.

A rolling mechanism 40, is situated inside the second seat 24 which also passes through the block, and is destined for coming into contact with the floor with the extendable foot withdrawn.

The extendable foot 30 comprises a threaded stem 31 suitable for being moved along a threading 25 situated directly in the first seat 23, or inside a threaded sleeve inserted in the first seat.

In order to activate the threaded stem 31, this has a notch 32, at the upper end, preferably of the unified type such as an embedded hexagon, a cross imprint or the like, suitable for receiving the tip of a tool such as a hexagonal key or screwdriver, etc.

The notch can obviously be substituted with a similar engagement means such as hexagonal lugs preferably activated by standard tools.

In this respect, the first seat 23 has an upper opening 26 which corresponds to a hole 28 situated in the bottom 12 of the piece of furniture.

At the end facing the ground, the stem has a rounded head 33 suitable for the insertion of an oscillating base 34 or shoe, made of a suitable material such as plastic.

In this way, by acting with the tool from inside the piece of furniture, it is possible to translate, by extending or withdrawing, the extendable foot thus regulating the height of the furniture.

The rolling mechanism 40 comprises a cylindrical shaped body 41 equipped with an upper lug 42 with a grooving above, preferably truncated-conical-shaped, suitable for being inserted in an upper opening 29 of the second seat 24, to be blocked by the insertion of a pin 44 in the upper grooving 43.

The rolling mechanism 40 is equipped with a roll 45 inserted inside the lower base of the cylindrical shaped body 41 which, for this purpose, has a cavity 46 suitable for partially housing a roll.

To allow the cylindrical body to pivot around its own vertical axis, in order to correctly direct the roll while the furniture is being moved, between the cylindrical shaped body 41 and the upper base of the block, inside the second seat 24, there is an annular cage 47 with balls 48 which slide inside annular throats 49 and 49' situated respectively along the inner surface of the upper base of the block 21 and correspondingly on the cylindrical shaped body 41.

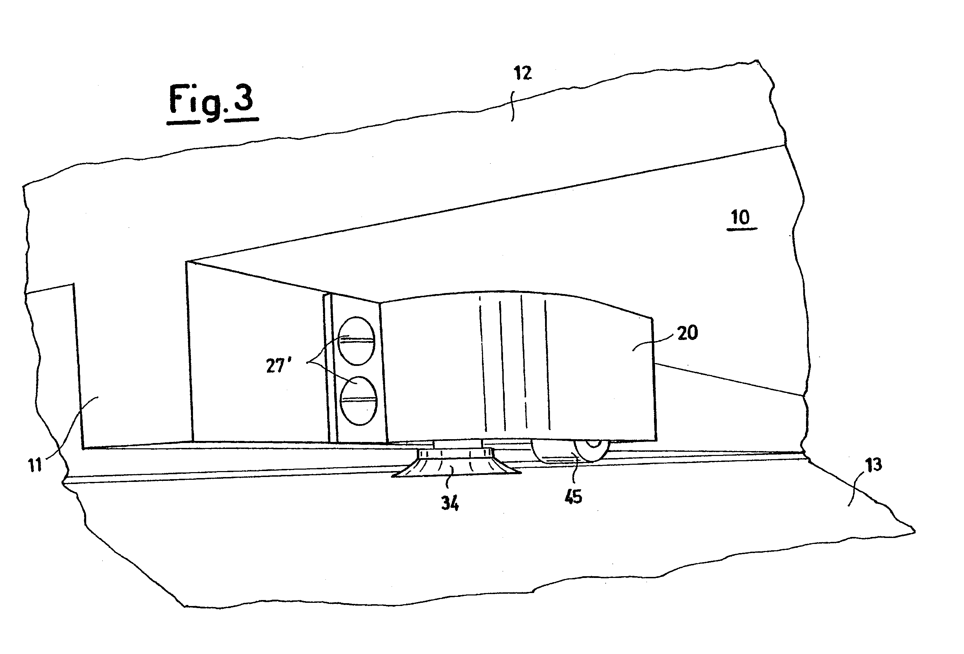

The roll 45 extends from the cylindrical shaped body 41 so as to rest on the floor 13 when the extendable foot 30 is withdrawn and is raised from the floor when the extendable foot is lowered as illustrated in figure 3.

In this way, it is sufficient to activate the extendable foot 30 by withdrawing it to allow the furniture to be moved allowing it to slide on the rolls 45 of the antiscraping supports fixed thereto.

From the above description, it can be clearly seen how it is possible to convert the levelling system to a rototranslation system for effecting the moving of furniture with the least possible effort and without damaging the floor.

Furthermore, with reference to the figures, it is evident how an antiscraping rototranslation support with a leveller for a piece of furniture according to the invention is particularly useful and advantageous. The objective mentioned in the preamble of the described is thus fulfilled.

The forms of the antiscraping rototranslation support with a leveller according to the invention can obviously differ from those shown for purely illustrative and non-limiting purposes in the drawings.

The protection scope of the invention is therefore delimited by the enclosed claims.

## Claims

1. An antiscraping rototranslation support with a leveller for a piece of furniture (10) comprising a small block (20) destined for being fixed to a shoulder (11) of the piece of furniture and housing an extendable foot, **characterized in that** said block (20) also comprises rolling means destined for coming into contact with the floor with the extendable foot withdrawn.

2. The antiscraping rototranslation support with a leveller according to claim 1, **characterized in that** in the block (20) there are a first and second circular seat (23, 24) open downwards and partially closed above by an upper base (21) of the block.

3. The antiscraping rototranslation support with a leveller according to claim 2, **characterized in that** said rolling means comprise a rolling mechanism (40) in turn comprising a cylindrical shaped body (41) having an upper lug (42) equipped above with a grooving (43), preferably truncated-conical, suitable for being inserted inside an upper opening (29) of the second seat (24), to be blocked by the insertion of a pin (44) in the upper grooving (43).

4. The antiscraping rototranslation support with a leveller according to claim 3, **characterized in that** said rolling mechanism (40) is equipped with a roll (45) embedded in a lower base of the cylindrical shaped body (41) which for this purpose has a cavity (46) suitable for partially housing the roll.

5. The antiscraping rototranslation support with a leveller according to claim 4, **characterized in that** between the cylindrical shaped body (41) and the upper base of the block, inside the second seat (24), there is an annular cage (47) with balls (48) which slide inside annular throats (49, 49') situated respectively along the inner surface of the upper base of the block (21) and correspondingly on the cylindrical shaped body (41) .

6. The antiscraping rototranslation support with a leveller according to claim 2, **characterized in that** the extendable foot (30) comprises a threaded stem (31) suitable for being moved along a threading (25) situated directly in the first seat (23).

7. The antiscraping rototranslation support with a leveller according to claim 6, **characterized in that** the threaded stem (31) has, at the upper end, a notch (32), preferably of the unified type such as an embedded hexagon, a cross imprint or the like, suitable for receiving the tip of a tool such as a hexagonal key or a screwdriver, etc.

8. The antiscraping rototranslation support with a leveller according to claim 7, **characterized in that** the first seat (23) has an upper opening (26) which corresponds to a hole (28) situated in the bottom (12) of the piece of furniture.

9. The antiscraping rototranslation support with a leveller according to claims 4 and 6, **characterized in that** the roll (45) extends from the cylindrical shaped body (41) so as to rest on the floor when the extendable foot (30) is withdrawn, and is raised from the floor when the extendable foot is lowered.
